# EUROPÄISCHE PATENTANMELDUNG

(11) **EP 1 890 021 A1**
(43) Veröffentlichungstag der Anmeldung: **20.02.2008**
(21) Anmeldenummer: 07114125.3
(22) Anmeldetag: 09.08.2007
(51) Int. Cl.: F02B 69/04, F02M 21/02, F02B 43/00, F02D 19/02, F02D 41/00

(54) **Verfahren zum Umrüsten eines Dieselmotors für Flüssiggas, Verbrennungsmotor und Steuergerät zum Betreiben eines Verbrennungsmotors mit Flüssiggas**

(30) Priorität: 11.08.2006 DE 102006037850
(71) Anmelder: GREENCAR Consult GmbH & Co. KG, 25524 Itzehoe (DE)
(72) Erfinder: Popov, Dragan, 85101, Lenting (DE)
(74) Vertreter: Bergmeier, Werner

(57) **Zusammenfassung**

Bei einem Verfahren zum Umrüsten eines nach dem Dieselverfahren betriebenen Verbrennungsmotors mit einem Dieselmotorsteuergerät (2) auf einen Betrieb mit Flüssiggas nach dem Ottoverfahren wird der Dieselmotor mit einer Zündanlage (9) und einem Gasmotorsteuergerät (10) versehen. Weiterhin wird dem Dieselmotor ein elektronisches Steuergerät (25) zugeordnet, welches eine Ausgangsgröße (7) des Dieselmotorsteuergeräts (2) in eine Eingangsgröße (26) des Gasmotorsteuergeräts (10) umsetzt. Ein Steuergerät (25) zum monovalenten Betreiben eines Verbrennungsmotors mit Flüssiggas nach dem Ottoverfahren, weist eine elektronische Schaltung (24) auf zur Umsetzung wenigstens einer Ausgangsgröße (7) des Dieselmotorsteuergeräts (2) in eine Eingangsgröße (26) des Gasmotorsteuergeräts (10). Ein Verbrennungsmotor, insbesondere zum Antrieb von Nutzfahrzeugen, ist mit Flüssiggas nach dem Ottoverfahren betrieben. Der Verbrennungsmotor ist ein für den monovalenten Flüssiggasbetrieb umgerüsteter, serienmäßiger Dieselmotor mit einem Dieselmotorsteuergerät (2).

## Beschreibung

Die vorliegende Erfindung betrifft einen Verbrennungsmotor, insbesondere zum Antrieb von Nutzfahrzeugen, welcher mit Flüssiggas nach dem Otto-Verfahren betrieben ist. Die Erfindung betrifft weiterhin ein Verfahren zum Umrüsten eines nach dem Diesel-Verfahren betriebenen Verbrennungsmotors mit einem Dieselmotorsteuergerät auf einen Betrieb mit Flüssiggas nach dem Otto-Verfahren sowie ein entsprechendes Steuergerät zum Betreiben eines serienmäßigen Dieselmotors mit einem elektronischen Dieselmotorsteuergerät mit Flüssiggas.

Flüssiggasbetriebene Motoren sind im Stand der Technik insbesondere zum Antrieb von Personenkraftwagen bekannt. Hierbei sind sowohl bereits serienmäßig mit einem Flüssiggasantrieb ausgestattete Fahrzeuge bekannt sowie eine Umrüstung von Ottomotoren auf Antrieb mit Flüssiggas, welche vergleichsmäßig problemlos möglich ist. Im Bereich von Nutzfahrzeugen sind nach wie vor Dieselmotoren die verbreitetste Antriebsart. Eine Ausweitung der Gasantriebe ist jedoch sowohl aus umweltpolitischen wie auch aus technischen Gründen wünschenswert.

Während sich die Umrüstung von Ottomotoren auf Flüssiggasantrieb vergleichsweise unproblematisch gestaltet, ist eine Umrüstung eines Dieselmotors auf Flüssiggasantrieb problematisch, da dieser erst auf das Otto-Verfahren umgerüstet werden müsste. Im Stand der Technik sind zur Umrüstung von Dieselmotoren auf Flüssiggasantrieb lediglich bivalente Konzepte bekannt. So ist es beispielsweise bekannt, einen Dieselmotor mit Gas zu betreiben, wobei zur Einleitung der Zündung eine geringe Menge Dieselkraftstoff eingespritzt wird. Hierdurch ist dann das Gas entzündbar.

Aufgabe der Erfindung ist es, ein Verfahren zum Umrüsten eines serienmäßigen Dieselmotors für einen monovalenten Flüssiggasantrieb vorzuschlagen, ein Steuergerät zum Betreiben des Verbrennungsmotors mit Flüssiggas sowie einen entsprechenden umgerüsteten Verbrennungsmotor.

Die Aufgabe wird gelöst mit den Merkmalen der unabhängigen Ansprüche.

Ein Verbrennungsmotor, insbesondere zum Antrieb von Nutzfahrzeugen, ist mit Flüssiggas nach dem Otto-Verfahren betrieben. Erfindungsgemäß ist der Verbrennungsmotor ein für den monovalenten Flüssiggasbetrieb umgerüsteter, serienmäßiger Dieselmotor mit einem Dieselmotorsteuergerät. Bei einem Verfahren zum Umrüsten eines nach dem Diesel-Verfahren betriebenen Verbrennungsmotors mit einem Dieselmotorsteuergerät auf einen Betrieb mit Flüssiggas nach dem Otto-Verfahren wird erfindungsgemäß der Dieselmotor mit einer Zündanlage und einem Gasmotorsteuergerät versehen. Dem Dieselmotor wird zusätzlich ein elektronisches Steuergerät zugeordnet, welches eine Ausgangsgröße des Dieselmotorsteuergerätes in eine Eingangsgröße des Gasmotorsteuergeräts umsetzt. Ein erfindungsgemäßes Steuergerät weist eine elektronische Schaltung auf, mittels welcher eine Ausgangsgröße des Dieselmotorsteuergeräts in eine Eingangsgröße des Gasmotorsteuergeräts umsetzbar ist. Mittels des erfindungsgemäßen Steuergerätes ist es möglich, einen serienmäßigen Dieselmotor für einen Betrieb mit Flüssiggas nach dem Otto-Verfahren umzurüsten. Vorteilhaft hierbei ist es, dass das serienmäßige Dieselmotorsteuergerät, welches auf weitere Einrichtungen zur Fahrzeugsteuerung, wie beispielsweise ein ABS-System, wirkt, erhalten bleibt.

Durch die erfindungsgemäße Umrüstung ist es möglich, strengere Abgasnormen und Feinstaubvorschriften zu erfüllen. Daneben ist beim Betrieb mit Flüssiggas auch eine größere Laufruhe der Motoren erreichbar, so dass die Lärmemissionen gesenkt werden können. Durch die erfindungsgemäße Umrüstung eines Dieselmotors auf Flüssiggasbetrieb lassen sich Nutzfahrzeuge darüber hinaus besonders wirtschaftlich betreiben.

Um den serienmäßigen Dieselmotor mit Flüssiggas betreiben zu können, ist dem Dieselmotor eine Zündanlage und ein Gasmotorsteuergerät zugeordnet. Weiterhin ist dem Dieselmotor ein elektronisches Steuergerät zugeordnet, welches eine Ausgangsgröße des Dieselmotorsteuergerätes in eine Eingangsgröße des Gasmotorsteuergerätes umsetzt. Hierdurch ist es in komfortabler Weise möglich, die qualitätsgeregelte Gemischbildung des Dieselmotor für den Flüssiggasantrieb in eine quantitätsgeregelte Gemischbildung umzusetzen. Um die Zylinderfüllung regulieren zu können, wird bei der Umrüstung dem Dieselmotor eine Drosselklappe zugeordnet. Die Öffnung der Drosselklappe ist hierbei durch das Gasmotorsteuergerät ansteuerbar, welches die Öffnungsinformation für die Drosselklappe durch eine Ausgangsgröße des erfindungsgemäßen Steuergerätes erhält.

Vorzugsweise ist die wenigstens eine Ausgangsgröße des Dieselmotorsteuergerätes ein Einspritzsignal eines Zylinders des Dieselmotors. Diese Ausgangsgröße des Dieselmotorsteuergerätes bildet zugleich eine Eingangsgröße des erfindungsgemäßen Steuergerätes, aus welcher mittels der elektronischen Schaltung die Öffnungsinformation für die Drosselklappe ermittelbar ist.

Nach einer bevorzugten Ausführungsform der Erfindung sind mittels der elektronischen Schaltung vier Ausgangsgrößen des Dieselmotorsteuergerätes, insbesondere Einspritzsignale von vier Zylindern des Dieselmotors, verarbeitbar. Vorzugsweise wird hierbei aus den ermittelten Werten der bis zu vier Zylinder für die weitere Verarbeitung ein Mittelwert gebildet.

Vorteilhaft ist es, wenn das Steuergerät bis zu sechs Eingangsstufen aufweist. Hierdurch ist eine optimale Ermittlung der Ausgangsgrößen des Dieselmotorsteuergerätes möglich.

Insbesondere ist es vorteilhaft, wenn die Eingangsstufen des Steuergerätes in ihren elektrischen Eigenschaften den serienmäßigen Einspritzelementen des Dieselmotors entsprechen. Das serienmäßige Dieselmotorsteuergerät erkennt hierdurch das Fehlen der serienmäßigen Einspritzelemente nicht, so dass das Dieselmotorsteuergerät dennoch fehlerfrei weiterbetrieben werden kann.

Daneben ist es vorteilhaft, wenn mittels der elektronischen Schaltung aus den Eingangsgrößen des Dieselmotorsteuergerätes eine Dieseleinspritzmenge ermittelbar ist. Vorzugsweise wird hierzu die Periodendauer der Einspritzsignale von bis zu vier frei wählbaren Zylindern erfasst und ausgewertet.

Weiterhin ist es vorteilhaft, wenn mittels der elektronischen Schaltung aus den Ausgangsgrößen des Dieselmotorsteuergerätes die Drehzahl des Motors ermittelbar ist. In Abhängigkeit der Dieseleinspritzmenge bzw. der Periodendauer der Einspritzsignale sowie der Drehzahl kann schließlich das Ausgangssignal des Steuergerätes ermittelt werden.

Vorteilhaft ist es, wenn das Steuergerät ein Ausgabemodul für Ausgangsgrößen des Steuergerätes aufweist. Besonders vorteilhaft ist es, wenn eine Ausgangsgröße des Steuergerätes eine analoge Gleichspannung ist, welche eine Eingangsgröße des Gasmotorsteuergerätes bildet. Hierdurch ist es möglich, aus den Einspritzsignalen des Dieselmotorsteuergerätes eine Dieseleinspritzmenge zu ermitteln, welche einem Signal eines serienmäßigen Pedalwertgebers entspricht. Durch die elektronische Schaltung wird hieraus eine Ausgangsgröße des Steuergerätes ermittelt, welche als analoge Gleichspannung über das Ausgabemodul des Steuergerätes ausgegeben wird. Vorzugsweise ist die analoge Gleichspannung proportional einer mittels der elektronischen Schaltung ermittelten Dieseleinspritzmenge. Das analoge Gleichspannungssignal bildet zugleich eine Eingangsgröße des Gasmotorsteuergerätes und ersetzt hierdurch ein Eingangssignal eines Pedalwertgebers.

Nach einer anderen Weiterbildung der Erfindung ist es vorteilhaft, wenn eine weitere Ausgangsgröße des Steuergerätes eine zu der analogen Gleichspannung gegenläufige Gleichspannung ist. Diese kann verwendet werden, um Diagnosemöglichkeiten des Gasmotorsteuergerätes nutzen zu können.

Weiterhin ist es vorteilhaft, wenn eine Ausgangsgröße des Steuergerätes ein Einspritzsignal für ein Additiveinspritzventil ist. Vorzugsweise ist hierbei das Einspritzsignal für das Additiveinspritzventil in Abhängigkeit von einer vorgebbaren Anzahl von Kurbelwellenumdrehungen ausgebbar. Die Anzahl der Kurbelwellenumdrehungen ist vorzugsweise durch das Steuergerät ebenfalls aus den Einspritzsignalen eines Zylinders ermittelbar. Insbesondere ist es vorteilhaft, eine Additiveinspritzung alle 720° KW vorzunehmen.

Nach einer anderen Weiterbildung der Erfindung ist es vorteilhaft, wenn mittels des Ausgabemoduls ein Fehlersignal ausgebbar ist. Dieses steuert dann beispielsweise eine Signalleuchte an.

Eine andere vorteilhafte Weiterbildung der Erfindung sieht vor, dass das Steuergerät eine Schnittstelle für einen externen Rechner aufweist. Durch den Anschluss eines externen Rechners ist es sowohl möglich, die in der elektronischen Schaltung hinterlegten Zusammenhänge darzustellen, wie auch Veränderungen an diesen vorzunehmen.

Vorzugsweise ist die elektronische Schaltung mittels einer Applikationssoftware durch den externen Rechner programmierbar. Insbesondere ist es hierbei vorteilhaft, wenn der Zusammenhang zwischen der Periodendauer der Einspritzsignale, der Motordrehzahl sowie der auszugebenden Ausgangsspannung zur Ansteuerung der Drosselklappe frei programmierbar ist. Ebenso ist es vorteilhaft, wenn Einspritzdauer und Einspritzzeiten für die Additiveinspritzung über die Applikationssoftware einstellbar sind.

Besonders vorteilhaft ist es hierbei, wenn in der elektronischen Schaltung ein Kennfeld hinterlegt ist zur Umsetzung der Ausgangsgrößen des Dieselmotorsteuergerätes in eine Eingangsgröße des Gasmotorsteuergerätes. Hierdurch ist es auch möglich, das Ausgangssignal des Steuergerätes in Abhängigkeit von einem Lastzustand des Motors auszugeben.

Besonders vorteilhaft ist es hierbei, wenn die elektronische Schaltung während des Fahrbetriebes veränderbar ist. Durch den externen Rechner sind während des Fahrbetriebes die aktuellen Informationen des Steuergerätes anzeigbar und auch änderbar. Hierdurch ist eine Anpassung der elektronischen Schaltung in besonders einfacher Weise möglich.

Nach einer weiteren vorteilhaften Ausführung der Erfindung ist die elektronische Schaltung echtzeitfähig. Hierdurch ist das Ausgangssignal ohne spürbaren Zeitverzug an eine veränderte Periodendauer der Einspritzsignale anzupassen.

Vorteilhaft ist es weiterhin, wenn für die Umrüstung eines serienmäßigen Dieselmotors das Verdichtungsverhältnis des Verbrennungsmotors gegenüber dem serienmäßigen Dieselmotor reduziert ist. Eine klopfende Verbrennung kann hierdurch vermieden werden.

Vorteilhaft ist es weiterhin, wenn die Kolben des serienmäßigen Dieselmotors durch Kolben ersetzt werden, welche für eine Flüssiggasverbrennung optimiert sind. Bei einem umgerüsteten Verbrennungsmotor ist hierbei die Geometrie der Kolben des Verbrennungsmotors für eine Verbrennung von Flüssiggas ausgebildet. So ist insbesondere eine spezielle Kolbenmulde vorgesehen, welche eine optimale Verbrennung des Flüssiggases sichert.

Für die nachträgliche Anordnung einer Zündanlage ist es vorteilhaft, wenn Bohrungen für Zündkerzen in einen Zylinderkopf des serienmäßigen Dieselmotors eingebracht sind. Diese werden im Bereich der Dieseleinspritzdüse sowie des Wassermantels eingearbeitet.

Um eine Abdichtung zwischen Wasser, Öl und der Zündkerze zu gewährleisten, ist es vorteilhaft, wenn in die Bohrungen eine Buchse eingesetzt, vorzugsweise eingeschraubt, ist.

Weiterhin ist es vorteilhaft, wenn dem Verbrennungsmotor ein OT-Geber zur Überwachung der Drehposition des Motors zugeordnet ist. Dieser kann beispielsweise als Kurbelwelleninduktivsensor ausgebildet sein.

Weiterhin ist es vorteilhaft, wenn dem Verbrennungsmotor im Abgasstrang eine Lambdasonde zugeordnet ist, welche eine Regelung des Verbrennungsluftverhältnisses ermöglicht.

Weitere Vorteile werden anhand der nachfolgend dargestellten Ausführungsbeispiele beschrieben. Es zeigen:
- **Figur 1**: eine schematische Übersichtsdarstellung der Gemischregulierung eines erfindungsgemäßen Verbrennungsmotors sowie
- **Figur 2**: eine schematische Darstellung eines erfindungsgemäßen Steuergerätes als Funktionsschaltbild.

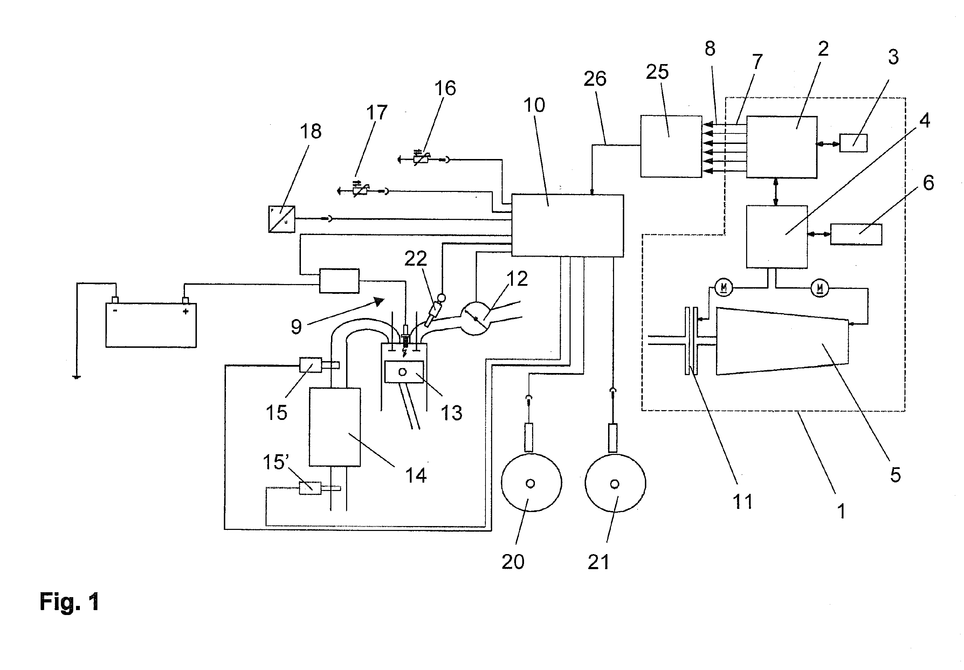

Figur 1 zeigt eine Anlage zur Gemischregulierung eines erfindungsgemäßen Verbrennungsmotors in einer schematischen Darstellung. Die serienmäßige Einrichtung 1 zur Motorsteuerung ist hierbei mit einer Strichlinie umfasst. Diese umfasst ein Dieselmotorsteuergerät 2, welches steuerungsmäßig mit einem Pedalwertgeber 3 verbunden ist und aus der Fahrpedalstellung zusammen mit weiteren Eingangsgrößen die einzuspritzende Kraftstoffmenge ermittelt. Das Dieselmotorsteuergerät 2 steht in ständigem Austausch mit einem Getriebesteuergerät 4, welches ein Getriebe 5 entsprechend der Informationen einer Schaltung 6 des Fahrzeuges ansteuert. Weiterhin ist das Getriebesteuergerät 4 mit einer Kupplung 11 verbunden.

Vorliegend ist als Verbrennungsmotor ein 6-Zylindermotor dargestellt, so dass das Dieselmotorsteuergerät sechs Ausgangssignale 7 ausgibt, welche in serienmäßigem Zustand des Dieselmotors als Einspritzsignale zur Ansteuerung der Einspritzelemente des Dieselmotors dienen.

Um einen Dieselmotor mit Flüssiggas betreiben zu können, ist eine Umrüstung des Dieselmotors auf das Otto-Verfahren notwendig. Hierzu ist erfindungsgemäße vorgesehen, dass dem Dieselmotor eine Zündanlage 9 zugeordnet wird. Hierzu werden in dem serienmäßigen Zylinderkopf des Dieselmotors (hier nicht dargestellt) im Bereich der Dieseleinspritzdüse und des Wassermantels entsprechende Bohrungen eingebracht, in welchen Zündkerzen anordenbar sind. In die nachträglich eingebrachten Bohrungen wird eine Buchse vorzugsweise eingeschraubt, in welche wiederum die Zündkerze einsetzbar ist. Hierdurch ist eine Abdichtung der Zündkerze möglich. Weiterhin ist, um die Kerzenbohrung zwischen Zylinderkopf und Ventildeckel vom Motoröl abzudichten, eine Buchse vorgesehen, welche in den Ventildeckel einsetzbar ist.

Weiterhin ist dem Dieselmotor ein Gasmotorsteuergerät 10 zugeordnet, um für den Betrieb mit Flüssiggas eine quantitative Gemischregulierung nach dem Otto-Verfahren zu ermöglichen. Der Dieselmotor wird hierzu im Ansaugstrang mit einer Drosselklappe 12 versehen, um die Zylinderfüllung regulieren zu können. Die Öffnung der Drosselklappe 12 wird hierbei vom Gasmotorsteuergerät 10 bestimmt. Zur Umrüstung des serienmäßigen Dieselmotors werden weiterhin spezielle Kolben 13 verwendet, welche über eine für die Verbrennung von Flüssiggas optimierte Kolbenmulde verfügen. Für die Umrüstung wird das Verdichtungsverhältnis des Motors wird erheblich reduziert, wodurch auch die Motorbelastung deutlich abnimmt. Der umgerüstete Motor verfügt weiterhin über einen Katalysator 14 sowie eine Lambdasonde 15, welche vorliegend vor dem Katalysator 14 angeordnet ist. Zusätzlich kann eine weitere Lambdasonde 15' nach dem Katalysator 14 angeordnet sein.

Weiterhin sind verschiedene Sensoren vorgesehen, welche den Betriebszustand des Motors erfassen und als Signale an das Gasmotorsteuergerät 10 geben. So ist ein Temperatursensor 16 vorgesehen, welcher die Temperatur der Ansaugluft erfasst, ein Temperatursensor 17 zur Erfassung der Kühlwassertemperatur sowie ein Drucksensor 18 zur Messung des Saugrohrdrucks bzw. Überwachung einer Turboaufladung. Daneben ist ein OT-Geber 20 zur Überwachung der Drehposition des Motors angeordnet. Ein weiterer Sensor 21 kann zur Überwachung der Nockenwellenposition vorgesehen sein. Darüber hinaus sind in bekannter Weise Sensoren zur Überwachung von Öldruck und Öltemperatur wie des Gasdruck und des Flüssiggasstandes (hier nicht dargestellt) vorhanden.

Die Zufuhr des Flüssiggases erfolgt über Einblasventile 22, welche durch das Gasmotorsteuergerät 10 angesteuert werden und in dem Saugrohr angeordnet sind. Anstelle von Einblasventilen 22 können auch Einspritzsysteme zur Flüssiggaseinspritzung verwendet werden. Flüssiggastanksysteme können in bekannter Weise bei Bussen unterflur oder aber auch auf dem Dach montiert werden. Bei Lastkraftwagen ist daneben auch eine Montage an einem seitlichen Rahmen möglich.

Vorteilhaft bei der Umrüstung von Dieselmotoren ist es hierbei, dass das serienmäßig vorhandene Dieselmotorsteuergerät 2 erhalten bleibt und somit auch alle sicherheitsrelevanten Abläufe, wie z. B. ein ABS-Eingriff, weiterhin voll funktionsfähig bleiben. Um das Dieselmotorsteuergerät 2 erhalten zu können, ist erfindungsgemäß ein weiteres Steuergerät 25 vorgesehen, welches die Mengeninformation bzw. die Einspritzsignale des Dieselmotorsteuergerätes 2 in eine Eingangsgröße 26 für das Gasmotorsteuergerät 10 umsetzt, welches hieraus wiederum eine Öffnungsinformation für die Drosselklappe 12 bildet.

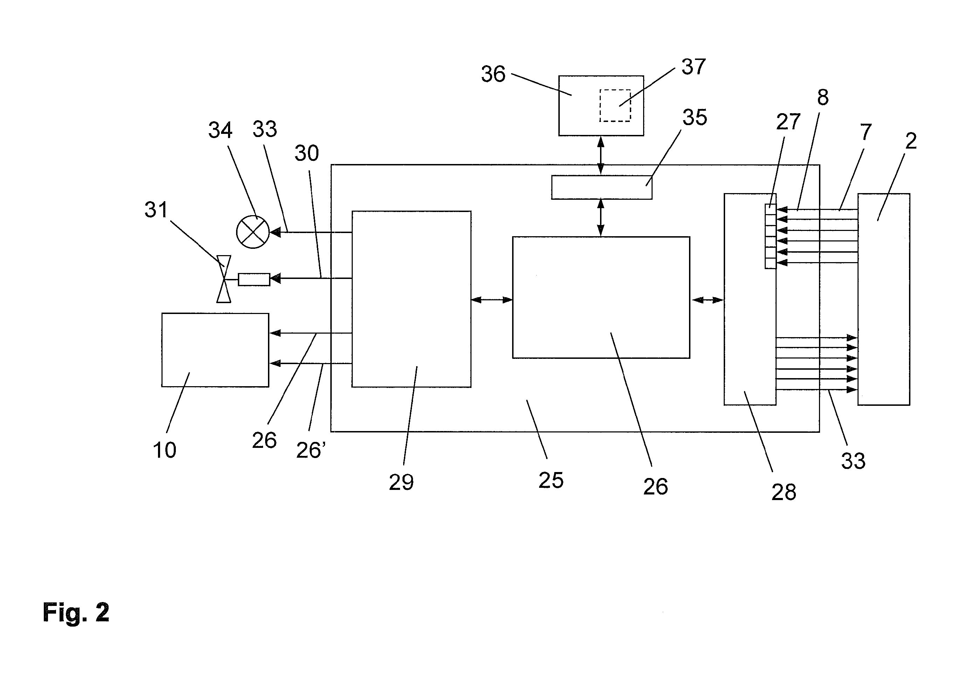

Eine schematische Darstellung des Steuergerätes 25 als Funktionsschaltbild zeigt Figur 2. Das erfindungsgemäße Steuergerät 25 umfasst eine elektronische Schaltung 26, mittels welcher eine oder mehrere Ausgangsgrößen 7 des Dieselmotorsteuergerätes 2 in eine Eingangsgröße 26 des Gasmotorsteuergerätes 10 umsetzbar sind. Das Steuergerät 25 verfügt hierzu über vorzugsweise 6 Eingangsstufen 27 sowie eine Einrichtung zur Signalkonditionierung 28, welche die Eingangsgrößen 8 des Steuergeräts 25 bzw. die Ausgangsgrößen 7 des Dieselmotorsteuergerätes 2 aufbereitet. Nach Verarbeitung in der elektronischen Schaltung 24 wird über ein Ausgabemodul 29 die Ausgangsgröße des Steuergerätes 25 ausgegeben.

Ausgangsgrößen 7 des Dieselsteuergerätes sind hierbei die Einspritzsignale für die sechs Zylinder des dargestellten 6-Zylindermotors. Das Steuergerät 25 erfasst hierbei die Periodendauer der Einspritzsignale, um hieraus eine Dieseleinspritzmenge zu ermitteln. Eine Auswertung der Einspritzmenge ist hierbei für alle sechs Eingangsstufen 27 möglich. Vorzugsweise ermittelt das Steuergerät 25 die Dieseleinspritzmenge jedoch aus den Einspritzsignalen von bis zu vier frei wählbaren Zylindern. Hieraus wird bevorzugt für die weitere Verarbeitung in der elektronischen Schaltung 24 ein Mittelwert gebildet, welcher den aktuellen Fahrzustand wiedergibt. Hierbei ist darauf zu achten, dass mit einer ausreichend hohen Abtastrate gemessen wird.

Entsprechend der aus den Ausgangssignalen 7 des Dieselsteuergerätes 2 ermittelten Dieseleinspritzmenge wird durch das Ausgabemodul 29 eine analoge Gleichspannung ausgegeben, welche zur ermittelten Dieseleinspritzmenge proportional ist. Diese liegt vorzugsweise im Bereich von 0 bis 5 Volt und bildet gleichzeitig eine Eingangsgröße 26 für das Gasmotorsteuergerät 10. Das Eingangssignal 26 für das Gasmotorsteuergerät 10 ersetzt somit das Signal eines Pedalwertgebers 3.

Als Pedalwertgeber 3 wird vorzugsweise ein Pedalwertgeber 3 mit einem Doppelpotentiometer verwendet, wodurch sowohl die Ansteuerung der Drosselklappe als auch eine Fehlerüberwachung möglich ist. Ein derartiges Doppelpotentiometer kann durch das Ausgeben einer weiteren Ausgangsgröße durch das Ausgabemodul nachgebildet werden, wobei eine der Eingangsgröße 26 des Gasmotorsteuergerätes 10 gegenläufige Gleichspannung 26' , im Bereich von 5 bis 0 Volt ausgebeben wird.

Als weitere Ausgangsgröße des Steuergerätes 25 ist durch das Ausgabemodul 29 ein Einspritzsignal 30 für ein Additiveinspritzventil 31 ausgebbar. Die Einspritzung des Additivs erfolgt nach einer vorgebbaren Anzahl an Umdrehungen der Kurbelwelle. Die Informationen über die Umdrehungen der Kurbelwelle erhält das Steuergerät 25 aus den Einspritzsignalen eines Zylinders. Bei einem Viertaktdieselmotor erfolgt die Einspritzung des Additivs vorzugsweise alle 720°. Weiterhin ist auch die Einspritzdauer des Additivs in der elektronischen Schaltung 24 programmierbar. Zusätzlich ist ein Fehlersignal 33 zur Ansteuerung einer Signallampe 34 im Fehlerfall ausgebbar.

Um das Dieselmotorsteuergerät 2 trotz der Umrüstung fehlerfrei weiter betreiben zu können, müssen die Eingangsstufen 27 dieselben elektrischen Kennwerte wie die serienmäßigen Dieseleinspritzelemente haben, wie durch die Pfeile 33 dargestellt.

Neben der Ermittlung der Dieseleinspritzmenge aus den Ausgangssignalen 7 des Dieselmotorsteuergerätes 2 wird durch die elektronische Schaltung 24 auch die Drehzahl des Motors errechnet. Diese wird zusammen mit der Periodendauer der Einspritzsignale für die Ermittlung der Gleichspannung zur Ansteuerung der Drosselklappe 12 verwendet. Der Zusammenhang zwischen der Periodendauer der Einspritzsignale, der Drehzahl und der Ausgangsspannung ist vorzugsweise in einem Kennfeld in der elektronischen Schaltung 24 hinterlegt. Dieses ist vorzugsweise frei programmierbar.

Das Steuergerät 25 verfügt weiterhin über eine Schnittstelle 35 für einen externen Rechner 36. Durch den externen Rechner 36 ist mit Hilfe einer Applikationssoftware 37 der Zusammenhang zwischen Periodendauer, Drehzahl und der Ausgangsspannung programmierbar. Ebenso ist über die Applikationssoftware 37 die Einspritzdauer sowie die Häufigkeit der Einspritzung des Additivs einstellbar. Eine derartige Änderung der Parameter der elektronischen Schaltung 24 ist hierbei vorzugsweise auch während des Fahrbetriebes möglich. Über die Schnittstelle 35 ist hierbei eine bidirektionale Kommunikation möglich, wobei von der elektronischen Schaltung 24 ständig die aktuelle Periodendauer der Einspritzmenge des Dieselmotorsteuergerätes 2, die aktuelle Motordrehzahl sowie die aktuelle Ausgangsspannung zum Gasmotorsteuergerät 10 gesendet werden. Zusätzlich sind mit der Applikationssoftware 37 der Zählerstand der Kurbelwellenumdrehungen, die Additiveinspritzdauer sowie gegebenenfalls ein Fehlerstatus übermittelbar.

In der Applikationssoftware 37 sind neben Änderungen des Kennfelds sowie der Parametrierung der Additiveinspritzung auch die Auswahl der vier zur Auswertung der Einspritzsignale herangezogenen Zylinder zu bestimmen und über die Schnittstelle 35 an die elektronische Schaltung 24 zu übermitteln. Das in der elektronischen Schaltung 24 hinterlegte Kennfeld weist hierbei vorzugsweise mehrere, von einem Lastzustand des Motors abhängige Bereiche auf, welche unabhängig voneinander einstellbar sind.

Vorzugsweise weist das Steuergerät 25 sechs Eingangsstufen 27 auf und ist zum Betrieb mit einem 6-Zylindermotor vorgesehen. Abwandlungen der Zahl der Eingangsstufen 27 sowie der Zahl der ausgewerteten Ausgangssignale 7 sind jedoch ebenso möglich. Das hier dargestellte Steuergerät 25 kann jedoch ebenso für 4-Zylindermotoren eingesetzt werden, wobei die Einspritzsignale aller vier Zylinder ausgewertet werden können oder aber auch frei programmierbar nur die von zwei Zylindern. Um einen 8-Zylindermotor betreiben zu können, können beispielsweise zwei Steuergeräte 25 jeweils im 4-Zylindermodus verwendet werden. Das Eingangssignal 26 für das Gasmotorsteuergerät 10 wird hierbei nur von einem einzigen Steuergerät 25 gebildet.

Die elektronische Schaltung 24 ist vorzugsweise echtzeitfähig, um Änderungen in den Einspritzsignalen ohne Zeitverzögerungen in eine Änderung der Drosselklappenstellung umsetzen zu können.

Um gefährliche Betriebzustände zu vermeiden, ist es vorteilhaft, wenn das Steuergerät 25 mit einer Sicherheitseinrichtung versehen ist. Durch diese muss gewährleistet werden, dass die durch das Ausgabemodul 29 ausgegebene Gleichspannung nicht fehlerhaft auf einem zu großen Wert stehen bleibt, um unkontrollierte Betriebszustände des Motors zu vermeiden. Im Fehlerfall muss die Ausgangsspannung durch die Sicherheitseinrichtung immer auf Null gesetzt werden, wodurch der Motor in den Leerlauf geht.

Mittels des erfindungsgemäßen Verbrennungsmotors sowie des erfindungsgemäßen Steuergerätes 25 ist es möglich, einen serienmäßigen Dieselmotor für den Betrieb mit Flüssiggas derart umzurüsten, dass dieser sehr wirtschaftlich betrieben werden kann. Hierdurch sind erhebliche Verbesserungen in Bezug auf die Abgasemission und Feinstaub möglich. Das serienmäßige Dieselmotorsteuergerät 2 kann hierbei erhalten bleiben, so dass wesentliche Fahrzeugfunktionen wie beispielsweise ABS weiterhin zur Verfügung stehen.

Die Erfindung ist nicht auf die dargestellten Ausführungsbeispiele beschränkt. Abwandlungen und Kombinationen im Rahmen der Patentansprüche fallen ebenfalls unter die Erfindung.

## Patentansprüche

1. Verbrennungsmotor, insbesondere zum Antrieb von Nutzfahrzeugen, welcher mit Flüssiggas nach dem Ottoverfahren betrieben ist, **dadurch gekennzeichnet, dass** der Verbrennungsmotor ein für den monovalenten Flüssiggasbetrieb umgerüsteter, serienmäßiger Dieselmotor mit einem Dieselmotorsteuergerät (2) ist.

2. Verbrennungsmotor nach dem vorhergehenden Anspruch, **dadurch gekennzeichnet, dass** dem Dieselmotor eine Zündanlage (9) und ein Gasmotorsteuergerät (10) zugeordnet ist und dem Dieselmotor weiterhin ein elektronisches Steuergerät (25) zugeordnet ist, welches eine Ausgangsgröße (7) des Dieselmotorsteuergeräts (2) in eine Eingangsgröße (26) des Gasmotorsteuergeräts (10) umsetzt.

3. Verbrennungsmotor nach einem der vorhergehenden Ansprüche, **dadurch gekennzeichnet, dass** dem Verbrennungsmotor eine Drosselklappe (12) zugeordnet ist.

4. Verbrennungsmotor nach einem der vorhergehenden Ansprüche, **dadurch gekennzeichnet, dass** das Verdichtungsverhältnis des Verbrennungsmotors gegenüber dem des serienmäßigen Dieselmotors reduziert ist.

5. Verbrennungsmotor nach einem der vorhergehenden Ansprüche, **dadurch gekennzeichnet, dass** eine Geometrie der Kolben (13) des Verbrennungsmotors, insbesondere eine Kolbenmulde, für eine Verbrennung von Flüssiggas ausgebildet ist.

6. Verbrennungsmotor nach einem der vorhergehenden Ansprüche, **dadurch gekennzeichnet, dass** Bohrungen für Zündkerzen in einen Zylinderkopf des serienmäßigen Dieselmotors nachträglich eingebracht sind.

7. Verbrennungsmotor nach einem der vorhergehenden Ansprüche, **dadurch gekennzeichnet, dass** in die Bohrungen eine Buchse eingesetzt ist.

8. Verbrennungsmotor nach einem der vorhergehenden Ansprüche, **dadurch gekennzeichnet, dass** dem Verbrennungsmotor ein OT-Geber (20) zur Überwachung der Drehposition des Motors zugeordnet ist.

9. Verbrennungsmotor nach einem der vorhergehenden Ansprüche, **dadurch gekennzeichnet, dass** dem Verbrennungsmotor wenigstens eine Lambda-Sonde (15, 15') zugeordnet ist.

10. Verbrennungsmotor nach einem der vorhergehenden Ansprüche, **dadurch gekennzeichnet, dass** der serienmäßige Dieselmotor ein Achtzylindermotor ist, welchem zwei Steuergeräte (25) zugeordnet sind.

11. Steuergerät (25) zum monovalenten Betreiben eines Verbrennungsmotors mit Flüssiggas nach dem Ottoverfahren, wobei der Verbrennungsmotor ein serienmäßiger Dieselmotor mit einem elektronischen Dieselmotorsteuergerät (2) ist, welchem zusätzlich ein Gasmotorsteuergerät (10) zugeordnet ist, wobei das Steuergerät (25) eine elektronische Schaltung (24) aufweist zur Umsetzung wenigstens einer Ausgangsgröße (7) des Dieselmotorsteuergeräts (2) in eine Eingangsgröße (26) des Gasmotorsteuergeräts (10).

12. Steuergerät nach dem vorhergehenden Anspruch, **dadurch gekennzeichnet, dass** die wenigstens eine Ausgangsgröße (7) des Dieselmotorsteuergeräts (2) ein Einspritzsignal eines Zylinders des Dieselmotors ist.

13. Steuergerät nach dem vorhergehenden Anspruch, **dadurch gekennzeichnet, dass** mittels der elektronischen Schaltung (24) vier Ausgangsgrößen (7) des Dieselmotorsteuergeräts (2), insbesondere Einspritzsignale von vier Zylindern des Dieselmotors, verarbeitbar sind.

14. Steuergerät nach einem der vorhergehenden Ansprüche, **dadurch gekennzeichnet, dass** das Steuergerät (25) bis zu sechs Eingangsstufen (27) aufweist.

15. Steuergerät nach einem der vorhergehenden Ansprüche, **dadurch gekennzeichnet, dass** die Eingangsstufen (27) des Steuergeräts (25) in ihren elektrischen Eigenschaften den serienmäßigen Einspritzelementen des Dieselmotors entsprechen.

16. Steuergerät nach einem der vorhergehenden Ansprüche, **dadurch gekennzeichnet, dass** mittels der elektronischen Schaltung (24) aus der/den Ausgangsgröße(n) (7) des Dieselmotorsteuergeräts (2) eine Dieseleinspritzmenge ermittelbar ist.

17. Steuergerät nach einem der vorhergehenden Ansprüche, **dadurch gekennzeichnet, dass** mittels der elektronischen Schaltung (24) aus der/den Ausgangsgröße(n) (7) des Dieselmotorsteuergeräts (2) die Drehzahl des Motors ermittelbar ist.

18. Steuergerät nach einem der vorhergehenden Ansprüche, **dadurch gekennzeichnet, dass** das Steuergerät (25) ein Ausgabemodul (29) für Ausgangsgrößen (26, 26', 30, 33) des Steuergeräts (25) aufweist

19. Steuergerät nach einem der vorhergehenden Ansprüche, **dadurch gekennzeichnet, dass** eine Ausgangsgröße (26, 26', 30, 33) des Steuergeräts (25) eine analoge Gleichspannung ist, welche eine Eingangsgröße (26) des Gasmotorsteuergeräts (10) bildet.

20. Steuergerät nach einem der vorhergehenden Ansprüche, **dadurch gekennzeichnet, dass** die analoge Gleichspannung proportional einer mittels der elektronischen Schaltung (24) ermittelten Dieseleinspritzmenge ist.

21. Steuergerät nach einem der vorhergehenden Ansprüche, **dadurch gekennzeichnet, dass** eine Ausgangsgröße des Steuergeräts (25) eine zu der analogen Gleichspannung gegenläufige Gleichspannung (26') ist.

22. Steuergerät nach einem der vorhergehenden Ansprüche, **dadurch gekennzeichnet, dass** eine Ausgangsgröße des Steuergeräts (25) ein Einspritzsignal (30) für ein Additiveinspritzventil (31) ist.

23. Steuergerät nach einem der vorhergehenden Ansprüche, **dadurch gekennzeichnet, dass** das Einspritzsignal (30) für das Additiveinspritzventil (31) in Abhängigkeit von einer vorgebbaren Anzahl von Kurbelwellenumdrehungen ausgebbar ist.

24. Steuergerät nach einem der vorhergehenden Ansprüche, **dadurch gekennzeichnet, dass** mittels des Ausgabemoduls (29) ein Fehlersignal (33) ausgebbar ist.

25. Steuergerät nach einem der vorhergehenden Ansprüche, **dadurch gekennzeichnet, dass** das Steuergerät (25) eine Schnittstelle (35) für einen externen Rechner (36) aufweist.

26. Steuergerät nach einem der vorhergehenden Ansprüche, **dadurch gekennzeichnet, dass** die elektronische Schaltung (24) mittels einer Applikationssoftware (37) durch den externen Rechner (36) programmierbar ist.

27. Steuergerät nach einem der vorhergehenden Ansprüche, **dadurch gekennzeichnet, dass** in der elektronischen Schaltung (24) ein Kennfeld hinterlegt ist zur Umsetzung der Ausgangsgröße(n) (7) des Dieselmotorsteuergeräts (2) in eine Eingangsgröße (26) des Gasmotorsteuergeräts (10).

28. Steuergerät nach einem der vorhergehenden Ansprüche, **dadurch gekennzeichnet, dass** die elektronische Schaltung (24) während des Fahrbetriebs veränderbar ist.

29. Steuergerät nach einem der vorhergehenden Ansprüche, **dadurch gekennzeichnet, dass** die elektronische Schaltung (24) echtzeitfähig ist.

30. Verfahren zum Umrüsten eines nach dem Dieselverfahren betriebenen Verbrennungsmotors mit einem Dieselmotorsteuergerät (2) auf einen Betrieb mit Flüssiggas nach dem Ottoverfahren, **dadurch gekennzeichnet, dass** der Dieselmotor mit einer Zündanlage (9) und einem Gasmotorsteuergerät (10) versehen wird und dem Dieselmotor ein elektronisches Steuergerät (25) zugeordnet wird, welches eine Ausgangsgröße (7) des Dieselmotorsteuergeräts (2) in eine Eingangsgröße (26) des Gasmotorsteuergeräts (10) umsetzt.

31. Verfahren nach dem vorhergehenden Anspruch, **dadurch gekennzeichnet, dass** das Verdichtungsverhältnis des serienmäßigen Dieselmotors reduziert wird.

32. Verfahren nach dem vorhergehenden Anspruch, **dadurch gekennzeichnet, dass** Kolben (13) des serienmäßigen Dieselmotors durch Kolben (13) ersetzt werden, welche für eine Flüssiggasverbrennung optimiert sind.
